# EUROPÄISCHE PATENTSCHRIFT

(11) **EP 1 930 617 B1**
(45) Veröffentlichungstag und Bekanntmachung des Hinweises auf die Patenterteilung: **29.09.2010**
(21) Anmeldenummer: 07019882.5
(22) Anmeldetag: 11.10.2007
(51) Int. Cl.: F16D 65/12

(54) **Feder für eine Verbundbremsscheibe und Verbundbremsscheibe**
Spring for a composite brake disc and composite brake disc
Ressort pour un disque de frein composite et disque de frein composite

(30) Priorität: 09.12.2006 DE 102006058174
(43) Veröffentlichungstag der Anmeldung: 11.06.2008
(73) Patentinhaber: Dr. Ing. h.c. F. Porsche AG, 70435 Stuttgart (DE)
(72) Erfinder: Kirschner, Thomas, 70435 Stuttgart (DE); Prahst, Alexander, 71299 Wimsheim (DE)

(56) Entgegenhaltungen:
- EP-B- 1 395 760
- WO-A-02/25135
- DE-C1- 10 025 102
- US-A- 3 994 378

## Beschreibung

Die Erfindung betrifft eine Verbundbremsscheibe, gemäß dem Oberbegriff von Patentanspruch 1 wobei die Verbundbremsscheibe einen Reibring, einen Topf und mehrere den Topf und den Reibring verbindende Verbindungsvorrichtungen aufweist, wobei je Verbindungsvorrichtung jeweils eine Feder vorgesehen ist, die einen zentralen Bereich und zwei symmetrisch zueinander ausgebildete Federbereiche aufweist, welche sich an jeweils gegenüberliegenden Seiten an den ebenen, zentralen Bereich anschließen.

Die EP 1 395 760 B1 beschreibt eine Verbundscheibenbremsscheibe mit einem als ringförmiges Bremsband ausgebildeten Reibring und mit einem als Glocke ausgebildeten Topf mit mehreren radialen Vertiefungen um seinen Umfang herum. Zwischen dem Bremsband und der Glocke sind Verbindungsvorrichtungen vorgesehen. Gemäß der EP 1 395 760 B1 sind auf Seite der Glocke im Bereich der Verbindungsvorrichtungen Scheibenfedern angeordnet, wobei Einsätze aus abnutzungsfestem Material zwischen den Scheibenfedern und der den Scheibenfedern zugewandten Stirnfläche der Glocke angeordnet sind.

Die Druckschrift WO 02/25135 A1 beschreibt eine Bremsscheiben-Nabenverbindung für Scheibenbremsen für Nutzfahrzeuge, wobei eine innenbelüftete Bremsscheibe auf eine Nabe axial aufschiebbar ist, wobei die Bremsscheibe mit über eine Mehrzahl an Stegen verbundenen Reibringen versehen ist, und wobei Federelemente vorgesehen sind, welche mit Schrauben an die Nabe angekoppelt werden, welche Federelemente jeweils einen Halteabschnitt und zwei Federabschnitte aufweisen, die sich in den gegengesetzten Richtungen weg vom Halteabschnitt erstrecken, wobei einerseits die Federabschnitte über gekrümmte Zwischenabschnitte mit dem Halteabschnitt verbunden sind, um die Federwirkung zu erhöhen und klar definierte Andruckflächen zu schaffen, und andererseits das Ausmaß der Andruckfläche somit begrenzt ist, wodurch ein Wärmeübergang von einer evtl. heißen Bremsscheibe begrenzt ist. Gemäß der

WO 02/25135 A1 stützt das Federelement somit die Bremsscheibe über die Zwischenelemente gegen einen Anschlag an der Nabe ab.

Bekannte Federn, die in Verbundbremsscheiben verwendet werden, beispielsweise auch die aus der EP 1 395 760 B1 bekannten Scheibenfedern, können das Auftreten von Hot Spots und/oder das Auftreten des so genannten Rubbelns begünstigen.

Unter Rubbeln wird das periodische Auftreten von Bremskraftschwankungen trotz konstanter Betätigungskraft verstanden. Hot Spots sind Hitzeflecken am Reibring, insbesondere an der Bremsscheiben-Oberfläche, welche das Brems- und Lenksystem eines Kraftfahrzeugs zu Schwingungen anregen können. Hot Spots können insbesondere beim Abbremsen eines Kraftfahrzeugs aus hoher Geschwindigkeit auftreten.

Aufgabe der vorliegenden Erfindung ist es, eine Verbundbremsscheibe mit an Verbindungsvorrichtungen vorgesehenen Federn derart bereitzustellen, dass ein einfacher und robuster Aufbau der Verbundbremsscheibe ermöglicht wird und dass zur Vermeidung von Hot Spots sowie zur Vermeidung des Rubbelns der Bremsscheibe beigetragen wird. Diese Aufgabe wird erfindungsgemäß gelöst durch die Merkmale des unabhängigen Patentanspruchs 1. Vorteilhafte Weiterbildungen der Erfindung sind Gegenstand der Patentansprüche 2 bis 13.

Die der Erfindung zugrunde liegende Aufgabe wird gelöst durch eine Verbundbremsscheibe mit einem Reibring, mit einem Topf und mit mehreren den Topf und den Reibring verbindenden Verbindungsvorrichtungen, wobei je Verbindungsvorrichtung jeweils eine Feder gemäß der Erfindung oder einer ihrer Weiterbildungen vorgesehen ist, um ein elastisches axiales Spiel zwischen dem Topf und dem Reibring zu erlauben.

Je Verbindungsvorrichtung der erfindungsgemäßen Verbundbremsscheibe ist jeweils eine Feder vorgesehen, die erfindungsgemäß zwei symmetrisch zueinander ausgebildete Federbereiche aufweist, welche sich an jeweils gegenüberliegenden Seiten an den ebenen, zentralen Bereich anschließen, wobei die Federbereiche jeweils einen Bogen und einen Federarm aufweisen. Die erfindungsgemäß verwendete Feder erzielt aufgrund ihrer hohen freien Biegelänge und der Ausbildung des Bogens eine sehr flache Kennlinie und zeichnet sich durch eine einfache und kompakte Bauform aus. In ihrer Gesamtheit bedingen die Merkmale der erfindungsgemäß verwendeten Feder im Vergleich zu bekannten Federn deutlich verbesserte Eigenschaften für den Einsatz in einer Verbundbremsscheibe, wobei das Auftreten von Hot Spots und der Effekt des thermischen Rubbelns weitestgehend vermieden werden.

Erfindungsgemäß beschreiben die Bögen der Federbereiche jeweils einen Kreisbogen, dem ein Winkel von mindestens 180° entspricht.

Mit Vorteil können die Bögen konvex ausgebildet sein und es kann zwischen dem zentralen Bereich und den konvexen Bögen jeweils ein konkaver Übergangsbereich vorgesehen sein. Dadurch wird die Kennlinie der Feder weiter verbessert.

Vorzugsweise können die Übergangsbereiche jeweils einen Kreisbogen beschreiben, dem ein Winkel von bis zu 90° entspricht.

Vorzugsweise können die Übergangsbereiche (15a, 15b) jeweils einen Kreisbogen beschreiben, dem ein Winkel von bis zu 45° entspricht.

Mit Vorteil kann der Radius der Übergangsbereiche mindestens das vierfache der Wandstärke der Feder betragen.
Mit Vorteil können die Federarme jeweils einen Endbereich mit einer gerundeten Auflagefläche aufweisen. Diese Ausbildung der Endbereiche der Federarme stellt in konstruktiv einfacher Weise sicher, dass der Topf einer Verbundbremsscheibe durch die aufliegende Feder nicht beschädigt wird.

Die der Erfindung zugrunde liegende Aufgabe wird auch gelöst durch eine Verbundbremsscheibe mit einem Reibring, mit einem Topf und mit mehreren den Topf und den Reibring verbindenden Verbindungsvorrichtungen, wobei je Verbindungsvorrichtung jeweils eine Feder gemäß der Erfindung oder einer ihrer Weiterbildungen vorgesehen ist, um ein elastisches axiales Spiel zwischen dem Topf und dem Reibring zu erlauben.

Weitere Einzelheiten und Vorteile der Erfindung und ihrer Weiterbildungen werden nachfolgend beispielhaft unter Bezugnahme auf die Zeichnungen erläutert. Es zeigen, jeweils schematisch,
- Fig. 1: eine perspektivische Ansicht eines Ausführungsbeispiels einer erfindungsgemäßen Feder,
- Fig. 2: einen Schnitt durch eine erfindungsgemaße Feder sowie einen Teil einer Verbundbremsscheibe,
- Fig. 3: eine perspektivische Teilansicht einer Verbundbremsscheibe,

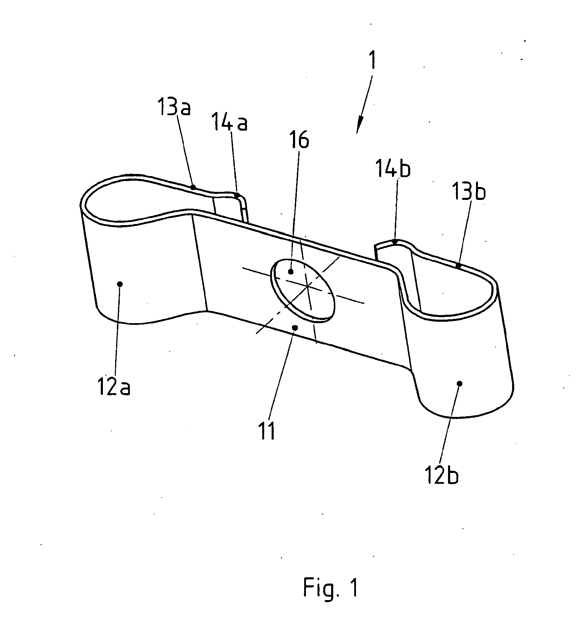

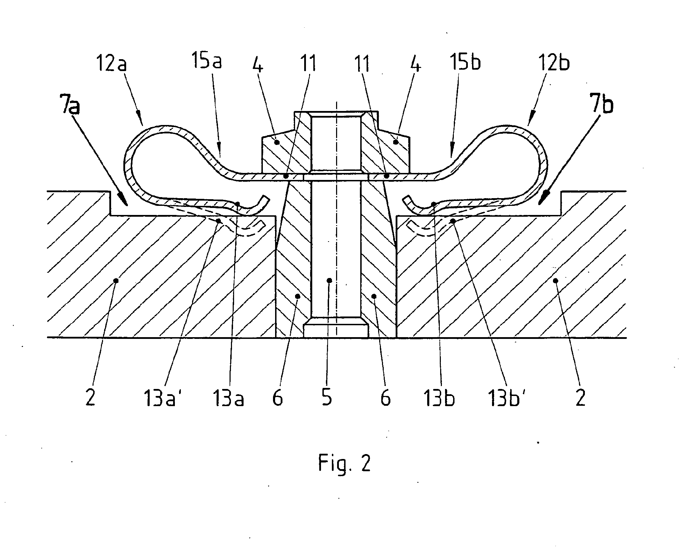

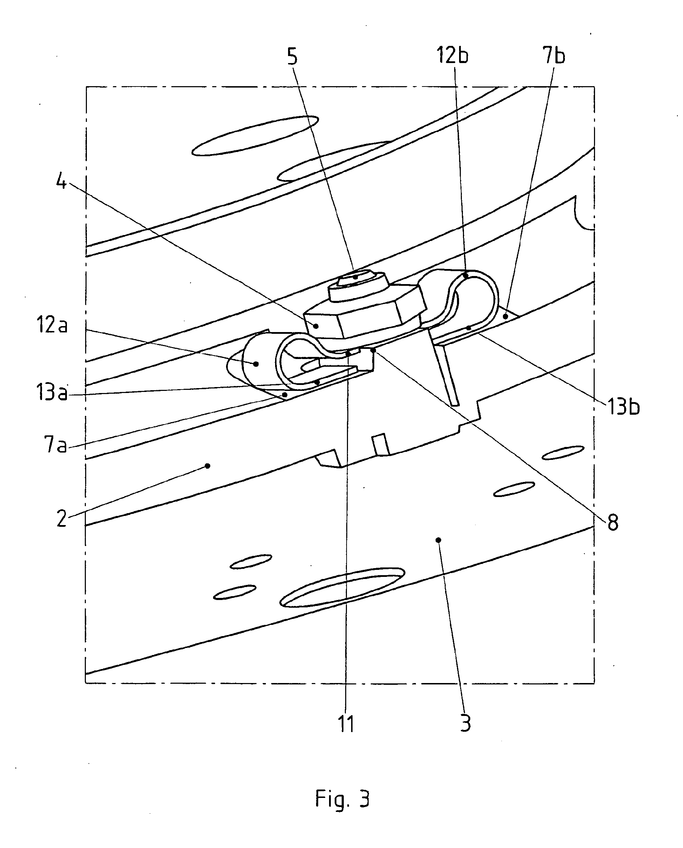

Fig. 1 zeigt eine perspektivische Ansicht einer Feder 1 für eine Verbundbremsscheibe. Die Feder 1 weist einen ebenen, zentralen Bereich 11 mit einem Loch 16 auf. An den zentralen Bereich 11 schließen sich an jeweils gegenüberliegenden Seiten Federbereiche an. Die beiden Federbereiche sind jeweils durch einen im wesentlichen konkav ausgebildeten Bogen 12a, 12b gekennzeichnet. Im gezeigten Beispiel beschreiben die Bögen 12a, 12b jeweils im Wesentlichen einen Kreisbogen, wobei der dem Kreisbogen entsprechende Winkel mindestens 180°, im gezeigten Beispiel mehr als 180° beträgt. An die Bögen 12a, 12b schließen sich jeweils Federarme 13a, 13b an. Die Federarme 13a, 13b weisen im gezeigten Beispiel gebogene Endbereiche 14a, 14b auf. Die Endbereiche 14a, 14b der Federarme 13a, 13b weisen eine gerundete Auflagefläche auf, wodurch Beschädigungen des Topfs 2 (siehe Figuren 2 und 3) der Verbundbremsscheibe auch bei großer Beanspruchung zuverlässig vermieden werden.

Fig. 2 zeigt einen Schnitt durch eine Feder, wie sie perspektivisch in Fig. 1 dargestellt ist, und durch einen Teil einer Verbundbremsscheibe. Eine Verbindungsvorrichtung 5 für den Topf 2 und den Reibring 3 (siehe Fig. 3) der Bremsscheibe erstreckt sich durch ein Loch im Topf 2 der Bremsscheibe und durch das in Fig. 2 nicht näher bezeichnete Loch 16 (siehe Fig. 1) im zentralen Bereich 11 der Feder. Zwischen dem Topf 2 und der Verbindungsvorrichtung 5 kann ein Zwischenelement 6 vorgesehen sein, welches die Verbindungsvorrichtung 5 aufnimmt. Das Zwischenelement 6 kann dabei insbesondere im Bereich des Topfs 2 hülsenartig ausgebildet sein. Die Feder ist vorzugsweise im Gleitsitz angeordnet. Der zentrale Bereichs 11 der Feder kann ein Ende des Zwischenelements 6 berühren bzw. mit dem Zwischenelement 6 zusammenwirkend gelagert sein. Dabei kann das Zwischenelement 6 als Verdrehsicherung für die Feder ausgebildet sein. Auf die Verbindungsvorrichtung 5 ist im gezeigten Beispiel eine Mutter 4 aufgeschraubt. Vorzugsweise ist die Mutter 4 selbst sichernd ausgebildet.

Zwischen den Bögen 12a, 12b und dem zentralen Bereich 11 der Feder sind jeweils Übergangsbereiche 15a, 15b vorgesehen. Die Übergangsbereiche 15a, 15b sind jeweils konkav ausgebildet und beschreiben vorzugsweise einen Kreisbogen, wobei der Winkel, der dem Kreisbogen der Übergangsbereiche 15a, 15b entspricht, deutlich kleiner ist als der Winkel, der dem Kreisbogen der konvexen Bögen 12a, 12b entspricht. Im gezeigten Beispiel beschreiben die Übergangsbereiche jeweils einen Kreisbogen, dem ein Winkel von bis zu 90° entspricht. Der Radius der Übergangsbereiche 15a, 15b kann vorzugsweise ungefähr gleich oder größer sein als das Vierfache der Wandstärke der Feder. Die Feder wird vorzugsweise aus einem einzigen Halbzeug hergestellt und besteht z.B. aus Edelstahl, insbesondere aus einem gebogenen Edelstahlblech.

In Fig. 2 ist die Feder in ihrer Einbaulage gespannt dargestellt. Die Federarme in gespannter Lage sind durch die Bezugszeichen 13a, 13b gekennzeichnet. Vergleichsweise ist die entspannte Lage der Federarme in der Zeichnung gestrichelt und mit den Bezugszeichen 13a', 13b' versehen angedeutet. Durch die Beweglichkeit der Feder können thermisch bedingte Lageveränderungen zwischen Topf 2 und Reibring 3 zuverlässig ausgeglichen werden. Das Auftreten des thermisch bedingten Rubbelns kann derart zumindest weitestgehend vermieden werden.

Die in Fig. 2 aus Gründen der Übersichtlichkeit nicht mit Bezugszeichen versehenen, gerundeten Auflageflächen der Endbereiche 14a, 14b (siehe Fig. 1) der Federarme 13a, 13b verhindern eine Beschädigung des Topfs 2 der Bremsscheibe. Durch eine derartige Ausbildung der Federarme 13a, 13b kann auf zusätzliche Andruckscheiben und/oder Ausgleichselemente zwischen den Federarmen 13a, 13b und dem Topf 2 verzichtet werden. Dies ist thermisch günstiger und führt zudem zu einer kostengünstigeren und robusteren Konstruktion.

Fig. 3 zeigt eine Feder für eine Verbundbremsscheibe, wobei die Verbundbremsscheibe einen Reibring 3 und einen Topf 2 aufweist. Auf die in Fig. 3 nur ansatzweise erkennbare Verbindungsvorrichtung 5 für den Topf 2 und für den Reibring 3 ist eine Mutter 4 aufgeschraubt. Die Verbundbremsscheibe kann z.B. einen Topf 2 aus Metall, beispielsweise aus Edelstahl oder vorzugsweise aus Leichtmetall, z.B. Aluminium oder Magnesium, aufweisen. Als Material für den Reibring 3 können beispielsweise ein Metall oder eine Metalllegierung wie Stahl, z.B. Grauguss, Keramik oder Karbon verwendet werden. Die Verbindungsvorrichtungen 5 können unter Verwendung einer Metalllegierung, z.B. Edelstahl, hergestellt werden.

Die Federarme 13a, 13b der Verbundbremsscheibe liegen auf dem Topf 2 der Bremsscheibe auf, wobei die Federarme vorzugsweise die im Zusammenhang mit den Figuren 1 und 2 beschriebenen Endbereiche 14a, 14b mit gerundeten Auflageflächen aufweisen, welche in Fig. 3 nicht näher dargestellt sind. Vorzugsweise sind im Topf 2 Vertiefungen 7a, 7b zur Aufnahme der Federarme 13a , 13b vorgesehen. Der Topf 2 und/oder das in Zusammenhang mit Fig. 2 beschriebene Zwischenelement 6 sind vorzugsweise derart ausgebildet, dass die Feder insbesondere in Radialrichtung gehalten wird. Der Topf 2 und/oder das Zwischenelement 6 (siehe Fig. 2) können dabei eine Verdrehsicherung für die Feder ausbilden. Vorzugsweise sind dazu Stege 8 am Topf 2 oder an dem Zwischenelement 6 ausgebildet, die bei montierter Feder auf den beiden nicht von den Federbereichen begrenzten Seiten der Feder angeordnet sind.

Durch den Einsatz einer erfindungsgemäßen Feder wird ein einfacher Aufbau einer Verbundbremsscheibe ermöglicht, wobei das Auftreten von Hot Spots und der Effekt des thermischen Rubbelns weitestgehend vermieden werden. Gleichzeitig ist ein funktionsgerechter Sitz der Feder sichergestellt, wobei die Belastung des Topfs 2 durch die Auflagefläche der Feder äußerst gering gehalten wird. Durch die Ausgestaltung der Feder mit einem zentralen Bereich 11 und den symmetrisch zueinander ausgebildeten Federbereichen mit den Bögen 12a, 12b und den Federarmen 13a, 13b wird die Kennlinie der Feder funktionsgerecht verbessert und gleichzeitig eine in Umfangsrichtung selbst haltende Feder bereitgestellt, welche ein elastisches axiales Spiel zwischen dem Topf 2 und dem Reibring 3 einer Verbundbremsscheibe ermöglicht.

## Patentansprüche

1. Verbundbremsscheibe mit einem Reibring (3), mit einem Topf (2) und mit mehreren den Topf (2) und den Reibring (3) verbindenden Verbindungsvorrichtungen (5), wobei je Verbindungsvorrichtung (5) jeweils eine Feder (1) vorgesehen ist, um ein elastisches axiales Spiel zwischen dem Topf (2) und dem Reibring (3) zu erlauben, wobei die Feder (1) einen ebenen, zentralen Bereich (11) mit einem Loch (16) und zwei symmetrisch zueinander ausgebildete Federbereiche aufweist, welche sich an jeweils gegenüberliegenden Seiten an den ebenen, zentralen Bereich (11) anschließen, wobei die Federbereiche jeweils einen Bogen (12a, 12b) und einen Federarm (13a, 13b) aufweisen, **dadurch gekennzeichnet, dass** die Bögen (12a, 12b) jeweils einen Kreisbogen beschreiben, dem ein Winkel von mindestens 180° entspricht.

2. Verbundbremsscheibe nach Anspruch 1, wobei zwischen den konvexen Bögen (12a, 12b) und dem zentralen Bereich (11) jeweils ein konkaver Übergangsbereich (15a, 15b) angeordnet ist.

3. Verbundbremsscheibe nach Anspruch 2, wobei die Übergangsbereiche (15a, 15b) jeweils einen Kreisbogen beschreiben, dem ein Winkel von bis zu 90° entspricht.

4. Verbundbremsscheibe nach Anspruch 3, wobei die Übergangsbereiche (15a, 15b) jeweils einen Kreisbogen beschreiben, dem ein Winkel von bis zu 45° entspricht.

5. Verbundbremsscheibe nach einem der Ansprüche 1 bis 4, wobei der Radius der Übergangsbereiche (15a, 15b) mindestens das Vierfache der Wandstärke der Feder beträgt.

6. Verbundbremsscheibe nach einem der Ansprüche 1 bis 5, wobei die Federarme (13a, 13b) jeweils einen Endbereich (14a, 14b), mit einer gerundeten Auflagefläche aufweisen.

7. Verbundbremsscheibe nach einem der Ansprüche 1 bis 6, wobei die Federn jeweils in einer als Verdrehsicherung ausgebildeten Aufnahmevorrichtung angeordnet sind.

8. Verbundbremsscheibe nach Anspruch 7, wobei zumindest ein Teil des zentralen Bereichs (11) von Stegen (8) verdrehsicher gehalten wird.

9. Verbundbremsscheibe nach einem der Ansprüche 1 bis 8, wobei die Federarme (13a, 13b) auf dem Topf (2) der Verbundbremsscheibe aufliegen.

10. Verbundbremsscheibe nach Anspruch 9, wobei der Topf (2) Vertiefungen (7a, 7b) zur Aufnahme der Federarme (13a, 13b) aufweist.

11. Verbundbremsscheibe nach einem der Ansprüche 1 bis 10, wobei sich die Verbindungsvorrichtungen (5) durch Löcher in der Verbundbremsscheibe erstrecken.

12. Verbundbremsscheibe nach einem der Ansprüche 1 bis 11, wobei die Verbindungsvorrichtungen (5) jeweils im Gleitsitz angeordnet sind.

13. Verbundbremsscheibe nach einem der Ansprüche 1 bis 12, wobei die Verbindungsvorrichtungen (5) sich jeweils durch das Loch (16) der zugeordneten Feder erstrecken.

## Claims

1. Composite brake disk with a friction ring (3), with a pot (2) and with a plurality of connection devices (5) connecting the pot (2) and the friction ring (3), in each case a spring (1) being provided for each connection device (5), in order to allow an elastic axial play between the pot (2) and the friction ring (3), the spring (1) having a planar central region (11) with a hole (16) and two spring regions which are formed symmetrically to one another and which in each case on sides lying opposite one another adjoin the planar central region (11), the spring regions in each case having an arc (12a, 12b) and a spring arm (13a, 13b), **characterized in that** the arcs (12a, 12b) in each case describe a circle arc to which an angle of at least 180° corresponds.

2. Composite brake disc according to Claim 1, a concave transitional region (15a, 15b) being arranged in each case between the convex arcs (12a, 12b) and the central region (11).

3. Composite brake disk according to Claim 2, the transitional regions (15a, 15b) in each case describing a circle arc to which an angle of up to 90° corresponds.

4. Composite brake disk according to Claim 3, the transitional regions (15a, 15b) in each case describing a circle arc to which an angle of up to 45° corresponds.

5. Composite brake disk according to one of Claims 1 to 4, the radius of the transitional regions (15a, 15b) amounting to at least four times the wall thickness of the spring.

6. Composite brake disk according to one of Claims 1 to 5, the spring arms (13a, 13b) in each case having an end region (14a, 14b) with a rounded bearing surface.

7. Composite brake disk according to one of Claims 1 to 6, the springs being arranged in each case in a reception device designed as an antitwist device.

8. Composite brake disk according to Claim 7, at least part of the central region (11) being held in an antitwist manner by webs (8).

9. Composite brake disk according to one of Claims 1 to 8, the spring arms (13a, 13b) bearing on the pot (2) of the composite brake disk.

10. Composite brake disk according to Claim 9, the pot (2) having depressions (7a, 7b) for receiving the spring arms (13a, 13b).

11. Composite brake disk according to one of Claims 1 to 10, the connection devices (5) extending through holes in the composite brake disk.

12. Composite brake disk according to one of Claims 1 to 11, the connection devices (5) being arranged in each case with a sliding fit.

13. Composite brake disk according to one of Claims 1 to 12, the connection devices (5) in each case extending through the hole (16) of the assigned spring.

## Revendications

1. Disque de frein composite avec un anneau de friction (3), avec une cuvette (2) et avec plusieurs dispositifs de liaison (5) reliant la cuvette (2) et l'anneau de friction (3), dans lequel un ressort (1) est respectivement prévu à chaque dispositif de liaison (5) afin de permettre un jeu axial élastique entre la cuvette (2) et l'anneau de friction (3), dans lequel le ressort (1) comporte une zone centrale plane (11) avec un trou (16) et deux zones de ressort formées de façon symétrique l'une par rapport à l'autre, qui se raccordent respectivement à des côtés opposés de la zone centrale plane (11), dans lequel les zones de ressort présentent respectivement un arc (12a, 12b) et un bras de ressort (13a, 13b), **caractérisé en ce que** arcs (12a, 12b) décrivent chacun un arc de cercle qui correspond à un angle d'au moins 180°.

2. Disque de frein composite selon la revendication 1, dans lequel une zone de transition concave (15a, 15b) est disposée respectivement entre les arcs convexes (12a, 12b) et la zone centrale (11).

3. Disque de frein composite selon la revendication 2, dans lequel les zones de transition (15a, 15b) décrivent respectivement un arc de cercle, qui correspond à un angle pouvant atteindre 90°.

4. Disque de frein composite selon la revendication 3, dans lequel les zones de transition (15a, 15b) décrivent respectivement un arc de cercle, qui correspond à un angle pouvant atteindre 45°.

5. Disque de frein composite selon l'une quelconque des revendications 1 à 4, dans lequel le rayon des zones de transition (15a, 15b) vaut au moins quatre fois l'épaisseur de paroi du ressort.

6. Disque de frein composite selon l'une quelconque des revendications 1 à 5, dans lequel les bras de ressort (13a, 13b) présentent respectivement une zone d'extrémité (14a, 14b) avec une surface d'appui arrondie.

7. Disque de frein composite selon l'une quelconque des revendications 1 à 6, dans lequel les ressorts sont disposés respectivement dans un dispositif de réception se présentant sous la forme d'un obstacle à la rotation.

8. Disque de frein composite selon la revendication 7, dans lequel au moins une partie de la zone centrale (11) est retenue contre la rotation au moyen de nervures (8).

9. Disque de frein composite selon l'une quelconque des revendications 1 à 8, dans lequel les bras de ressort (13a, 13b) sont appliqués sur la cuvette (2) du disque de frein composite.

10. Disque de frein composite selon la revendication 9, dans lequel la cuvette (2) présente des cavités (7a, 7b) destinées à recevoir les bras de ressort (13a, 13b).

11. Disque de frein composite selon l'une quelconque des revendications 1 à 10, dans lequel les dispositifs de liaison (5) s'étendent à travers des trous dans le disque de frein composite.

12. Disque de frein composite selon l'une quelconque des revendications 1 à 11, dans lequel les dispositifs de liaison (5) sont respectivement posés en ajustement glissant.

13. Disque de frein composite selon l'une quelconque des revendications 1 à 12, dans lequel les dispositifs de liaison (5) s'étendent respectivement à travers le trou (16) du ressort associé.
